# EUROPÄISCHE PATENTSCHRIFT

(11) **EP 2 010 799 B1**
(45) Veröffentlichungstag und Bekanntmachung des Hinweises auf die Patenterteilung: **11.09.2013**
(21) Anmeldenummer: 07724168.5
(22) Anmeldetag: 11.04.2007
(51) Int. Cl.: F16C 17/02, F16F 15/26, F16C 33/02

(54) **AUSGLEICHSWELLE**
BALANCING SHAFT
ARBRE D'EQUILIBRAGE

(30) Priorität: 18.04.2006 DE 102006018119; 01.06.2006 DE 102006026012; 27.02.2007 DE 102007009800
(43) Veröffentlichungstag der Anmeldung: 07.01.2009
(60) Teilanmeldung: 11191688.8
(73) Patentinhaber: Herzog Intertec GmbH, 78601 Mahlstetten (DE)
(72) Erfinder: HERZOG, Ewald, 78601 Mahlstetten (DE); HERZOG, Raphael, 78601 Mahlstetten (DE)
(74) Vertreter: Maser, Jochen
(86) Internationale Anmeldenummer: PCT/EP2007/003227
(87) Internationale Veröffentlichungsnummer: WO 2007/121861

(56) Entgegenhaltungen:
- EP-A1- 1 081 410
- EP-A2- 1 775 484
- WO-A-2005/093286
- JP-A- 9 151 993

## Beschreibung

Die Erfindung betrifft eine Ausgleichswelle für einen Motor.

Aus der WO 2005/093286 A1 ist eine Ausgleichswelle für einen Mehrzylindermotor bekannt, welcher wenigstens zwei Unwuchtgewichtsabschnitte und wenigstens eine Lagerstelle umfasst, wobei die Unwuchtgewichtsabschnitte symmetrisch zur Lagerstelle angeordnet sind und wenigstens einer der Unwuchtgewichtabschnitte mit einem von der Lagerstelle abgewandten Ende als antreibbares Ende für die Ausgleichswelle aufweist. Zwischen den beiden Lagerstellen mit deren symmetrisch dazu angeordneten Unwuchtgewichtsabschnitten ist ein biegeelastisches Koppelelement vorgesehen, um die beiden Abschnitte miteinander zu verbinden. Die Unwuchtgewichtabschnitte sind in etwa halbkreisförmig ausgebildet. Die Lagerstellen sind als kreiszylindrische Scheiben vorgesehen, wobei eine Hälfte der zylinderförmig ausgebildeten Lagerstelle gegenüber den Unwuchtgewichtsabschnitten frei hervorsteht. Zur Aussteifung dieser Ausgleichswelle sind in Längsrichtung der Ausgleichswelle sich erstreckende, T-förmig ausgebildete Streben vorgesehen, die sich von einer Rotationsachse aus an der Unwucht angreifend bis zu einem freien äußeren Randbereich der zylinderförmigen Lagerstelle erstrecken. Dadurch soll die Ausgleichswelle in Längsrichtung ausgesteift werden. Solche Ausgleichswellen sind teils gewichtsoptimiert ausgestaltet, jedoch ist aufgrund der immer höheren Drehzahlen in Mehrzylindermotoren erforderlich, dass die bewegten Massen weiter reduziert werden. Des Weiteren ist die Gewichtseinsparung in der Motorenentwicklung von wesentlicher Bedeutung, um verbesserte Leistungswerte zu erzielen.

Aus der JP 09 151 993 geht eine Ausgleichswelle hervor, welche mit einem Lagerzapfen in einem Motorgehäuse drehbar gelagert ist. Dieser Lagerzapfen umfasst eine kleine Abflachung, durch welche die radiale Lauffläche unterbrochen ist. Durch diese kleine Abflachung wird mit der Lagerbohrung im Motorengehäuse eine Schmiermitteltasche gebildet, um sicherzustellen, dass bei dieser Gleitlagerung ein Schmiermittelfilm aufrechterhalten bleibt.

Aus der EP 1 081 410 A1 geht eine Ausgleichswelle für einen Motor mit wenigstens einem Unwuchtgewichtsabschnitt und wenigstens einer Lagerstelle hervor. Die Lagerstelle umfasst eine Lauffläche, in welcher eine Schmiermitteltasche eingearbeitet ist. Diese Schmiermitteltasche wird durch zwei äußere stegförmige Laufflächenbereiche begrenzt, die ein Teil der sich um 360° erstreckenden Lauffläche sind.

Aus der EP 1 775 484 A2, welche Stand der Technik ist nach A. 54(3) EPÜ, ist eine Ausgleichswelle für einen Motor mit einer Radiallagerung bekannt, bei der die Ausgleichswelle einen Lagersitz umfasst, der relativ zu einer den Lagersitz in einer Lastzone beaufschlagenden Radiallast im Wesentlichen stillsteht. Der Lagersitz weist in Richtung der Längsachse eine über dessen Umfang veränderliche Breite derart auf, dass der Lagersitz ausgehend von der Lastzone außerhalb der Lastzone deutlich verjüngt ist. Diese Verjüngung kann auch dazu führen, dass der Lagersitz außerhalb der Lastzone unterbrochen ist.

Der Erfindung liegt deshalb die Aufgabe zugrunde, eine Ausgleichswelle zu schaffen, bei der eine Reduzierung des Gesamtgewichtes und der bewegten Massen unter Beibehaltung des Unwuchtausgleichs bei Motoren gegeben ist.

Diese Aufgabe wird erfindungsgemäß durch die Merkmale des Anspruchs 1 gelöst. Weitere vorteilhafte Ausgestaltungen und Weiterbildungen sind in den weiteren abhängigen Ansprüchen angegeben.

Durch die erfindungsgemäße Ausgleichswelle mit einer Lagerstelle, welche eine radiale Lauffläche aufweist, die sich nur partiell über den Umfang der Lagerstelle und somit nicht über eine Umfang von 360° erstreckt und die Lagerstelle im Querschnitt zur Längsrichtung der Ausgleichswelle gesehen eine Vertiefung aufweist, wird eine erhebliche Gewichtsreduzierung an der Lagerstelle selbst ermöglicht. Die Lagerstelle ist somit in Teilbereichen freigeschnitten und weist zumindest in dem nicht durch die Lauffläche ausgebildeten Freiraum eine Materialreduzierung auf. Durch das Freischneiden der Lagerstelle beziehungsweise durch die nicht vollständig umlaufend ausgebildete Lauffläche, die die Materialreduzierung ermöglicht, wird neben der Gewichtsreduzierung der Lagerstelle selbst, die in einem Bereich zwischen 20 bis 40 % gegenüber einer herkömmlichen Ausgleichswelle liegt, des Weiteren der Vorteil erzielt, dass ein oder mehrere Unwuchtgewichtsabschnitte ebenfalls reduziert werden können. Die partiell über den Umfang der Lagerstelle sind erstreckende Lauffläche korrespondiert mit dem Umfangsabschnitt der Ausgleichswelle, in dem die Unwuchtgewichtsabschnitte vorgesehen sind. Dadurch wird ermöglicht, dass bei Rotation der Ausgleichswelle die resultierende Zentrifugalkraft in einem Bereich der Lagerstelle liegt, der durch die partielle Lauffläche ebenfalls umfasst ist, so dass sich die Lauffläche der Ausgleichswelle in diesem Bereich an der Lagerstelle des Motorblocks abstützt.

Diese erfindungsgemäße Ausgestaltung der partiell über den Umfang der Lagerstelle ausgebildeten Lauffläche weist des Weiteren den Vorteil auf, dass eine Lagerung mit einer hohen Lebensdauer erhalten bleibt. In dem Bereich, in welchem bei Rotation der Ausgleichswelle die resultierende Zentrifugalkraft wirkt, ist die Lauffläche vollständig ausgebildet und erstreckt sich benachbart hierzu, so dass im Bereich der größten Belastung die Lagerstelle an einer Lagerbuchse, an Rollen einer Nadelhülse, an einem Zylinderrollenlager oder an einem Lagerring des Motorblocks zur Lagerung definiert zur Abstützung anliegt. Der der größten Belastung gegenüberliegende, nur teilweise oder nicht mit einer Lauffläche versehene Bereich der Lagerstelle wird nahezu oder vollständig entlastet, so dass ein Nichtvorhandensein der Lauffläche in diesem Bereich für die Lagerfunktion unschädlich ist.

Nach einer weiteren vorteilhaften Ausgestaltung der Erfindung ist vorgesehen, dass die Lauffläche in axialer Richtung gesehen ballig ausgebildet sind. Dadurch können während dem Betrieb auftretende Biegebeanspruchungen zwischen den Lagerstellen sowie eine Verkantung oder Verkippung ohne Beschädigungen der Lagerstelle, wie beispielsweise einer Lagerbuchse, eines Lagerringes, Nadelrollen oder Zylinderrollen, aufgenommen werden.

Die Lagerstelle der Ausgleichswelle umfasst im Querschnitt zu deren Längsrichtung gesehen eine Vertiefung, die V-förmig, W-förmig, wannenförmig oder topfförmig ausgebildet ist. Solche Vertiefungen können unmittelbar bei der Herstellung der Ausgleichswelle durch Gießen, Schmieden, Pressen oder dergleichen als auch durch eine spanabhebende Bearbeitung eingebracht werden, so dass eine kostengünstige Herstellung solcher Lagerstellen bei gleichzeitiger Gewichtseinsparung ermöglicht ist.

Bevorzugt ist vorgesehen, dass die Vertiefung der Lagerstelle symmetrisch zur Längsrichtung der Ausgleichswelle ausgebildet ist. Dadurch ist ein konstruktiv einfacher Ausbau der Ausgleichswelle und insbesondere die Auslegung der Unwuchtgewichtsabschnitte ermöglicht.

Nach einer alternativen Ausgestaltung der Vertiefung ist vorgesehen, dass diese zusammen mit der nur teilweise über den Umfang sich erstreckenden Lauffläche der Lagerstelle eine Querschnittsfläche bilden, bei der die Rotationsachse im Querschnitt der Lagerstelle liegt. Diese Ausführungsform weist den Vorteil auf, dass eine Versteifung der Ausgleichswelle ermöglicht ist und somit die Ausgleichswelle für besondere Belastungen einsetzbar ist. In einem solchen Fall wird die etwas verringerte Gewichtseinsparung untergeordnet.

Nach einer alternativen Ausgestaltung der Erfindung ist vorgesehen, dass die Vertiefung in der Lagerstelle im Querschnitt gesehen zumindest einen mittleren Abschnitt aufweist, der in der Rotationsachse der Ausgleichswelle liegt. Dadurch kann die Rotationsachse ausgesteift werden, wobei benachbart zu dem mittleren Abschnitt zumindest ein weiterer Vertiefungsabschnitt zur Gewichtseinsparung ausgebildet sein kann.

Eine weitere alternative Ausgestaltung der Lagerstelle sieht vor, dass die Lauffläche der Lagerstelle und die sich daran anschließende Vertiefung eine Querschnittsfläche bilden, bei der die Rotationsachse außerhalb der Querschnittsfläche liegt. Dadurch kann beispielsweise ein sichelförmiger Querschnitt der Lagerstelle erzielt werden. Ein solcher Querschnitt weist den Vorteil auf, dass dieser gleichzeitig als Schöpfer für die Schmierflüssigkeit wirkt und eingesetzt werden kann.

Eine weitere alternative Ausführungsform der Lagerstelle sieht vor, dass eine Vertiefung mit der partiell über den Umfang der Lagerstelle sich erstreckenden Lauffläche einen turbinenradförmigen Querschnitt bilden. Dadurch ist die Förderung der Schmierflüssigkeit stark begünstigt.

Eine weitere vorteilhafte Ausgestaltung der Lagerstelle für die Ausgleichswelle sieht vor, dass die partiell sich über den Umfang erstreckenden Laufflächen symmetrisch zur resultierenden Zentrifugalkraft bei Rotation der Ausgleichswelle ausgebildet sind. Dadurch wirken die Lagerstellen selbst wie Unwuchtgewichtsabschnitte und können bei deren Berechnung für die Auslegung der Ausgleichswelle mit einbezogen werden.

Des Weiteren ist vorteilhafterweise vorgesehen, dass die Laufflächenbreite der partiell sich über den Umfang erstreckenden Lauffläche der Lagerstelle sich zu den Endabschnitten der Lauffläche zumindest abschnittsweise verjüngen. Anders ausgedrückt bedeutet dies, dass die Lauffläche im Wirkungsbereich der resultierenden Zentrifugalkraft eine größte Breite beziehungsweise Erstreckung in Achslängsrichtung der Ausgleichswelle aufweist und sich im und entgegen dem Uhrzeigersinn zu den freien Endabschnitten der Lauffläche in deren Breite zumindest abschnittsweise verjüngt. Dadurch kann eine zusätzliche Gewichtseinsparung und Verringerung der Lagerreibung erzielt werden. Die Breite der Lauffläche kann sich entlang des Umfangswinkels auch mehrfach ändern, so dass eine Verjüngung und eine Verbreiterung abwechselnd vorgesehen ist.

Der Umfangswinkel der Laufflächen der ersten Lagerstelle ist gemäß einer vorteilhaften Ausgestaltung der Erfindung gleich zum Umfangswinkel der Lauffläche der zumindest einen weiteren Lagerstelle. Dadurch werden gleiche Lagerbedingungen an jeder Lagerstelle geschaffen.

Des Weiteren ist bevorzugt vorgesehen, dass die erste und zumindest eine weitere Lauffläche der zumindest einen weiteren Lagerstelle in Achslängsrichtung der Ausgleichswelle betrachtet bezüglich deren Umfangswinkel gleich ausgerichtet sind. Dadurch kann insbesondere eine Ausgleichswelle für die statische Unwucht im Motorengehäuse geschaffen werden. Gleichzeitig wird dadurch auch eine im Wesentlichen spiegelsymmetrische Anordnung zur Mittelebene der Ausgleichswelle ermöglicht.

Nach einer alternativen Ausgestaltung der Erfindung ist vorgesehen, dass die Laufflächen der Lagerstellen in Achslängsrichtung zueinander verdreht vorgesehen sind. Dadurch kann eine sogenannte Momentenunwucht ausgeglichen werden. Solche Ausgleichswellen werden insbesondere bei Motoren mit einer V-förmigen Zylinderanordnung oder einer ungeraden Zylinderanzahl eingesetzt. Beispielsweise können bei einer Ausgleichswelle von mit zwei Lagerstellen die Laufflächen dieser Lagerstellen um 180° zueinander verdreht vorgesehen sein. Sofern mehr als zwei Lagerstellen vorgesehen sind, wird die Ausrichtung der Laufflächen an die zu erzielende Momentenunwucht angepasst und entsprechend zur Mittelebene der Ausgleichswelle in radialer Wirkrichtung gegeneinander versetzt oder verdreht angeordnet, so dass die entsprechenden Momentenunwuchten erzeugt werden können.

Bevorzugt ist für eine Ausgleichwelle für die Momentenunwucht vorgesehen, dass diese im Wesentlichen punktsymmetrisch zur Mittelebene ausgebildet ist. Dadurch können definierte Kräfte entsprechend dem jeweiligen Hebelarm zur Mittelebene wirken, wodurch die Momentenunwucht exakt auf die entgegenzuwirkenden Kräfte anpassbar ist.

Nach einer weiteren bevorzugten Ausgestaltung ist vorgesehen, dass bei wenigstens zwei gegeneinander um die X-Achse beziehungsweise Längsachse der Ausgleichswelle verdreht zueinander angeordneten Laufflächen der Lagerstelle ein Überschneidungsbereich der Laufflächen vorgesehen ist. Die Endbereiche der Lauffläche überlagern sich bei einer Blickrichtung entlang der Längsachse bevorzugt geringfügig. Dadurch kann eine verlustarme Lagerung vorgesehen sein.

Nach einer weiteren bevorzugten Ausgestaltung der Erfindung ist vorgesehen, dass zumindest ein Unwuchtabschnitt einen Außenumfangsabschnitt aufweist, der mit einem größeren Durchmesser als derjenige der zumindest einen Lauffläche der Lagerstelle ausgebildet ist. Solche über den Außenumfang der Lauffläche hinausstehenden Unwuchtabschnitte sind bevorzugt an einem äußeren Endabschnitt der Ausgleichswelle vorgesehen, so dass eine einfache Montage erhalten bleibt. Solche Ausgleichswellen dienen ebenfalls zum Ausgleich der Momentenunwucht.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Figur 1: eine perspektivische Ansicht einer ersten erfindungsgemäßen Ausführungsform einer Ausgleichswelle,
- Figur 2: eine schematische Seitenansicht der Ausgleichswelle gemäß Figur 1,
- Figur 3: eine schematische Schnittdarstellung entlang der Linie III-III in Figur 2,
- Figur 4: eine perspektivische Ansicht einer zweiten erfindungsgemäßen Ausführungsform einer Ausgleichswelle,
- Figur 5: eine schematische Seitenansicht der Ausgleichswelle gemäß Figur 4,
- Figur 6: eine schematische Schnittdarstellung entlang der Linie V-V in Figur 5,
- Figur 7: eine perspektivische Ansicht einer dritten erfindungsgemäßen Ausführungsform einer Ausgleichswelle,
- Figur 8: eine schematische Seitenansicht der Ausgleichswelle gemäß Figur 7,
- Figur 9: eine schematische Schnittdarstellung entlang der Linie V-V in Figur 8,
- Figur 10: eine alternative Ausführungsform einer Lagerstelle im Querschnitt zu Figur 9,
- Figur 11: eine perspektivische Ansicht einer vierten erfindungsgemäßen Ausführungsform einer Ausgleichswelle,
- Figur 12: eine schematische Seitenansicht der Ausgleichswelle gemäß Figur 11,
- Figur 13: eine perspektivische Ansicht einer fünften erfindungsgemäßen Ausführungsform einer Ausgleichswelle und
- Figur 14: eine schematische Seitenansicht der Ausgleichswelle gemäß Figur 13.

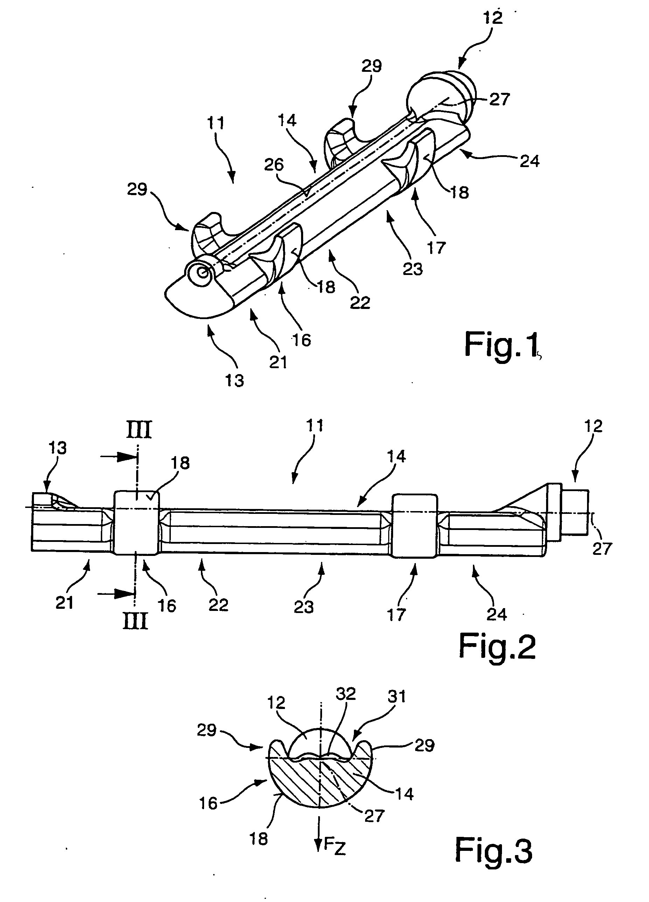

In Figur 1 ist perspektivisch eine erste Ausführungsform der erfindungsgemäßen Ausgleichswelle 11 dargestellt. Eine solche Ausgleichswelle 11 ist für einen Mehrzylindermotor vorgesehen und dient dem Ausgleich von Massenkräften zweiter Ordnung. Üblicherweise werden zwei Ausgleichswellen versetzt zueinander angeordnet, die dann in doppelter Motordrehzahl gegenläufig rotieren.

An einem in Figur 1 gezeigten hinteren Endabschnitt 12 ist der Ausgleichswelle ein nicht näher dargestellter Antrieb, wie beispielsweise ein Kettenrad, vorgesehen, welches die Ausgleichswelle 11 antreibt. Die Ausgleichswelle 11 umfasst einen Grundkörper 14, an dem eine erste und zweite Lagerstelle 16, 17 vorgesehen sind. Diese dienen zur Lagerung der Ausgleichswelle 11 in einem Motorblock. Diese Lagerstellen 16, 17 weisen eine Lauffläche 18 auf, deren Umfang größer als ein Umfang der übrigen Abschnitte des Grundkörpers 14 ausgebildet sind. Dadurch kann die Ausgleichswelle 11 in die Lager beziehungsweise Lagerbuchsen im Motorblock eingeschoben werden, und zwar mit einem Endabschnitt 13 voraus.

Die Ausgleichswelle 11 weist einen Grundkörper 14 auf, der im Wesentlichen in Längsrichtung der Ausgleichswelle 11 über die gesamte Länge einen gleichbleibenden Querschnitt aufweist. Symmetrisch zur ersten und zweiten Lagerstelle 16, 17 sind Unwuchtgewichtsabschnitte 21 bis 24 vorgesehen, wobei die Unwuchtgewichtsabschnitte 22 und 23 fließend ineinander übergehen. Bei deren Dimensionierung sind die Endabschnitte 12 und 13 berücksichtigt. Der Grundkörper 14 weist einen Wandabschnitt 26 auf, der eine Rotationsachse 27 der Ausgleichswelle 11 durchquert beziehungsweise in dieser Rotationsachse 27 liegt.

Die erste und zweite Lagerstelle 16, 17 weist eine partiell über den Umfang einer Lagerstelle 16, 17 sich erstreckende Lauffläche 18 auf, wobei die Lauffläche 18 einen Umfangswinkel von 180° bis 359° umfasst. Durch diese Ausgestaltung wird ein sogenanntes Partiallager gebildet. Im Ausführungsbeispiel gemäß Figur 3 liegt der Umfangswinkel der Lauffläche beispielsweise in einem Bereich zwischen 190° und 220°. Der weitere Bereich, der für einen 360° Winkel zur Vervollständigung vorgesehen wäre, wird erfindungsgemäß ohne Lauffläche ausgebildet. Die in den Figuren 1 bis 3 dargestellte erfindungsgemäße erste und zweite Laufstelle 16, 17 ermöglicht, dass im Vergleich zu kreiszylindrischen beziehungsweise scheibenförmigen Lagerstellen, die aus dem Stand der Technik bekannt sind, eine Lagerstelle 16, 17 mit einer erheblichen Gewichtseinsparung ausgestaltet ist. Gleichzeitig kann durch die über einen Umschlingungswinkel von 180° darüber hinaus ragenden Endbereiche 29 sichergestellt werden, dass ein einfacher Anlauf einer stillstehenden Ausgleichswelle 11 in einem Lager im Motorblock ermöglicht ist und dass insbesondere bei einem Stillstand der Ausgleichswelle in einer Position, in der die Unwuchtgewichtsabschnitte 21 bis 24 vertikal nach oben weisen, ein sicheres Anlaufen ohne Verkanten ermöglicht ist.

Die Lagerstelle 16, 17 weist im Querschnitt gemäß Figur 3 gesehen eine Vertiefung 31 auf, die topf- oder wannenförmig ausgebildet ist. Ein mittlerer Wandabschnitt 32 der Vertiefung 31 durchquert die Rotationsachse 27. An den mittleren Wandabschnitt 32 angrenzend sind Abflachungen vorgesehen, welche nach und nach in einem Kreisbogen übergehen, die den Unwuchtgewichtsabschnitt 21, 22, 23 und 24 begrenzen.

Aufgrund des in der Rotationsachse 27 liegenden mittleren Wandabschnittes 32 des Grundkörpers 14 wird ermöglicht, dass eine hinreichend steife Ausgestaltung der Ausgleichswelle 11 in Achslängsrichtung vorgesehen ist. Die bei Rotation der Ausgleichswelle resultierende Zentrifugalkraft weist im Ausführungsbeispiel aufgrund der dargestellten Lage der Ausgleichswelle 11 senkrecht nach unten gemäß Pfeil F_{Z} in Figur 3. Symmetrisch hierzu sind die Laufflächenabschnitte zur Bildung der partiellen Laufflächen 18 vorgesehen, die sich in und entgegen dem Uhrzeigersinn erstrecken. Idealerweise ist die in Figur 3 dargestellte symmetrische Anordnung eines linken und rechten Laufflächenabschnittes zur Bildung der gesamten partiellen Lauffläche 18 im Verhältnis zur Ausrichtung der resultierenden Zentrifugalkraft vorgesehen. Alternativ kann die resultierende Zentrifugalkraft auch eine Ausrichtung, wie beispielsweise in 4 oder 5 Uhr-, als auch 7 oder 8 Uhr-Position oder dergleichen, umfassen. Alternativ kann vorgesehen sein, dass die Lauffläche 18 sich über einen Winkel von bis zu 359° erstreckt. In einem solchen Fall ist keine wannenförmige Vertiefung 31 mehr vorgesehen, sondern ein hinter einem Spalt sich erstreckender Freiraum oder Hohlraum ausgebildet, wobei der Spalt durch die aufeinander zuweisenden Endbereiche 29 gebildet ist.

Bei der in den Figuren 1 bis 3 dargestellten Ausgleichswelle 11 sind die Lagerstellen 16 und 17 zur Bildung eines Gleitlagers ausgebildet. Diese Lagerstellen 16 und 17 können auch zur Bildung eines Wälzlagers in dem Motorblock ausgebildet sein. Die Lagerstellen am Motorblock können beispielsweise Zylinderrollen oder Rollen mit einer Nadelhülse umfassen. Die in Figur 3 dargestellte Querschnittsfläche mit den seitlich nach oben stehenden Endbereichen 29 zur Bildung der Lauffläche 18 weist den Vorteil auf, dass gleichzeitig eine Verwirbelung der Schmierflüssigkeit erfolgt und eine Schmierung der Lagerstelle 16, 17 sichergestellt ist.

Durch die in den Figuren 1 bis 3 dargestellte Ausgleichswelle werden insbesondere Massenkräfte, die eine statische Unwucht erzeugen, ausgeglichen, wie diese beispielsweise bei Vierzylinder-Reihenmotoren auftreten. Dadurch kann eine statische Unwucht ausgeglichen, welche beispielsweise in einer Y-Achse wirkt, welche senkrecht zur Z-Achse steht, wobei die X-Achse die Längsachse der Ausgleichswelle 11 bildet.

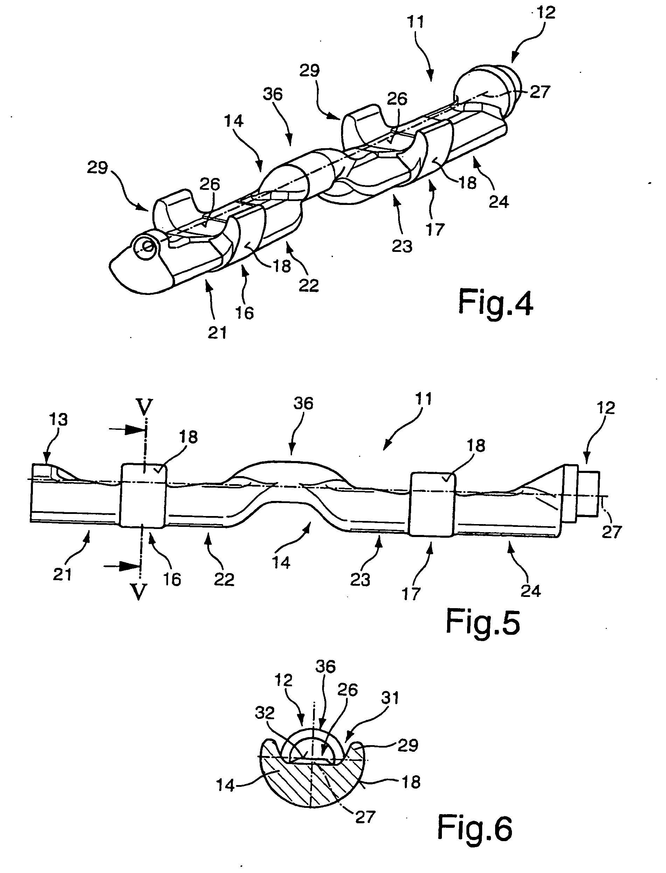

In den Figuren 4 bis 6 ist eine weitere alternative Ausführungsform einer Ausgleichswelle 11 zu Figur 1 dargestellt. Bei dieser Ausgleichswelle 11 ist der Grundkörper 14 modifiziert und wie in Figur 6 dargestellt, die Lagerstelle 16, 17 abweichend von Figur 3 ausgebildet.

Die Lagerstelle 16, 17 umfasst eine Vertiefung 31, die beispielsweise wannenförmig ausgebildet ist, wobei ein mittlerer Wandabschnitt 32, der zusammen mit der Vertiefung 31 und der partiell über den Umfang der Lagerstelle 16, 17 sich erstreckende Lauffläche 18 eine Querschnittsfläche bildet, die außerhalb der Rotationsachse 27 liegt. Bei einer solchen Ausführungsform wird das Gewicht der Lagerstelle 16, 17 gegenüber der Ausführungsform in Figur 3 noch weiter reduziert. Die damit verbundene Reduzierung der Unwucht wird dadurch kompensiert, dass im Vergleich an einer oder mehreren Stellen weniger Masse vorgesehen wird, die einen größeren Abstand zur Rotationsachse hat. Dieses Prinzip ermöglicht eine weitere Reduzierung der Gesamtmasse. Dabei ist bevorzugt vorgesehen, dass fließend weiche Übergänge von den Endabschnitten 12, 13 jeweils zum mittleren Wandabschnitt 32 der Lagerstelle 16, 17 vorgesehen sind. Solche weichen Übergänge sind ebenfalls zur Mitte der Ausgleichswelle 11 vorgesehen, welche einen Lünettenangriffsabschnitt 36 umfasst. Während der Herstellung solcher Ausgleichswellen 11, die zwischen Spitzen an den Endabschnitten 12 und 13 drehbar gelagert ist, greift eine Haltevorrichtung beziehungsweise Lünette zusätzlich an dem Lünettenangriffsabschnitt 36 an, um eine präzise Ausgestaltung der Lauffläche 18 während der Bearbeitung der Ausgleichswelle zu ermöglichen.

Eine in den Figuren 4 bis 6 dargestellte Ausgleichswelle 11 ist auf einem maximalen Leichtbau ausgelegt. In Abhängigkeit der verwendeten Materialien kann ein Mindestmaß an Steifigkeit und Biegefestigkeit in Längsrichtung der Ausgleichswelle 11 erzielt werden. Die Unwuchtgewichtsabschnitte 21, 22 sowie 23 und 24 sind symmetrisch zur Lagerstelle 16, 17 angeordnet, wobei jeweils deren weiterer Verlauf des Grundkörpers 14, wie beispielsweise der der Endabschnitte 12, 13 sowie der des Lünettenangriffsabschnitt 36, in die Auslegung der Masse der Unwuchtgewichtsabschnitte 21, 22, 23, 24 einfließt. Der kreissegmentförmige Querschnitt der Unwuchtgewichtsabschnitte 21, 22, 23, 24 weist den Vorteil auf, dass dadurch das Unwuchtgewicht weit exzentrisch außerhalb der Rotationsachse 27 positioniert werden kann.

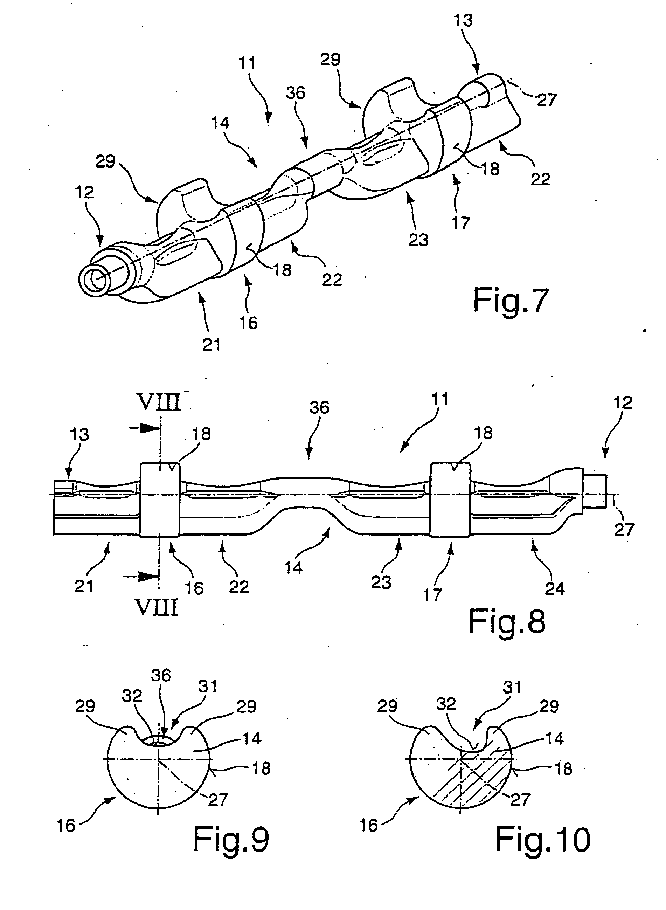

In den Figuren 7 bis 9 ist eine weitere alternative Ausführungsform einer Ausgleichswelle 11 dargestellt. Die Ausgleichswelle 11 gemäß den Figuren 7 bis 9 unterscheidet sich von der gemäß den Figuren 4 bis 6 dadurch, dass die Vertiefung 31 zusammen mit der Lauffläche 18 einen Querschnitt bildet, bei dem die Rotationsachse 27 der Querschnittsfläche innerhalb dieser Lagerstelle 16, 17 liegt. Dadurch wird eine Ausgleichswelle 11 geschaffen, welche ein etwas höheres Gewicht bei einer geringeren Unwucht aufweist. Gleichzeitig ist durch die Einbindung der Rotationsachse 27 in die Querschnittsfläche und in den gesamten Grundkörper 14 hochbelastbare Ausgleichswelle gegeben, bei der dennoch über die Lagerstellen 16, 17 eine Gewichtsreduzierung gegeben ist. Im Übrigen gelten die Ausführungen zu den Figuren 4 bis 6.

In Figur 10 ist eine schematische Schnittdarstellung einer Lagerstelle 16, 17 als alternative Ausführungsform zu Figur 9 dargestellt. Die Vertiefung 31 bildet zusammen mit der Lauffläche 18 einen turbinenradförmigen Querschnitt, wodurch eine Verwirbelung des Schmiermittels verstärkt wird.

Die Ausgestaltung der Vertiefung 31 in deren Form, Größe und/oder Geometrie ist an den jeweiligen Anwendungsfall angepasst, wobei eine Vielzahl von Ausgestaltungsmöglichkeiten vorgesehen sein können.

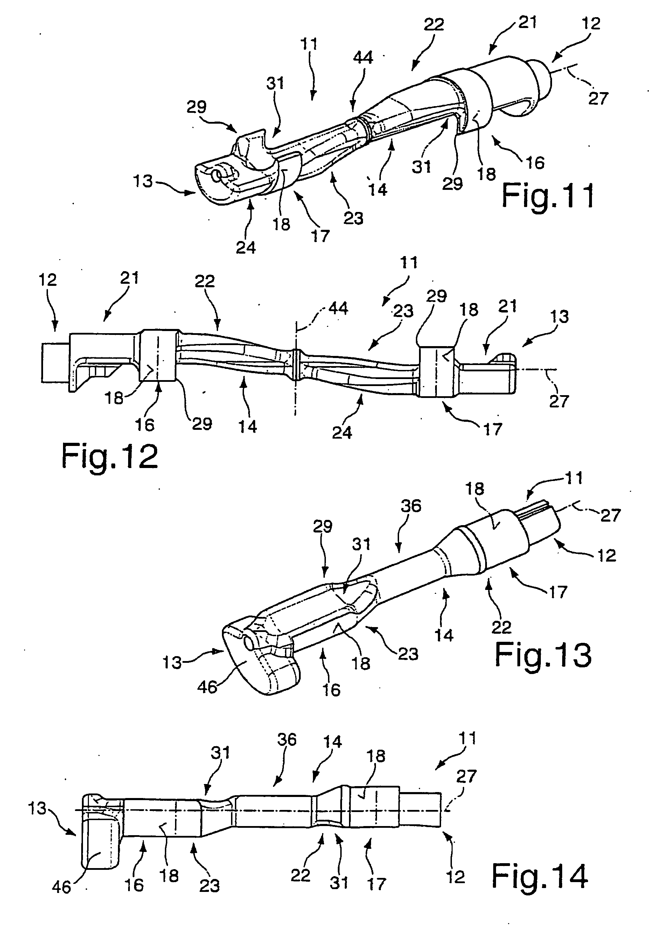

In den Figuren 11 und 12 ist eine weitere alternative Ausführungsform einer Ausgleichswelle 11 dargestellt. Diese Ausgleichswelle 11 unterscheidet sich zu denjenigen in den vorstehenden Figuren dadurch, dass die Unwuchtgewichtsabschnitte 21, 22, 23, 24 und Lagerstellen 16, 17 zur Mittelebene 44 im Wesentlichen punktsymmetrisch ausgebildet sind. Die Mittelebene 44 steht senkrecht zur X-Achse beziehungsweise Rotations- oder Längsachse der Ausgleichswelle 11. Eine solche Ausgleichswelle 11 wird im Unterschied zu den vorstehenden Ausgleichswellen 11 gemäß den Figuren 1 bis 9 zum Momentenunwuchtsausgleich eingesetzt. Eine solcher Momentenunwuchtsausgleich ist bei Motoren mit beispielsweise einer V-förmigen Zylinderanordnung, wie bei V3- oder V6-Motoren oder Reihenmotoren mit ungerader Zylinderanzahl, vorgesehen. Bei dieser Ausführungsform ist der Umfangswinkel der Lauffläche 18 jeder Lagerstelle 16, 17 derart ausgebildet, dass in der Rotationsachse der Ausgleichswelle 11 gesehen zumindest ein Endbereich 29 der Lauffläche 18 sich überlappt. Im Übrigen gelten die Ausführungen zu den vorstehenden Figuren.

In den Figuren 13 und 14 ist eine weitere alternative Ausführungsform einer Ausgleichswelle 11 dargestellt. Diese Ausführungsform ist eine Alternative zu der Ausgleichswelle 11 gemäß den Figuren 11 und 12. Bei dieser Ausführungsform ist an einem Ende der Ausgleichswelle 11 ein Unwuchtgewichtsabschnitt 46 vorgesehen, der zumindest abschnittsweise einen Außenumfang aufweist, welcher im Durchmesser größer als der Durchmesser der Lauffläche 18 ausgebildet ist. Dieser Unwuchtgewichtsabschnitt 46 ist als scheibenförmige Unwuchtmasse beziehungsweise als Teilsegment einer scheibenförmigen Unwuchtmasse ausgebildet. Die Anordnung einer solchen Unwuchtmasse an einem äußeren Ende der Ausgleichswelle 11 weist den Vorteil auf, dass eine einfache Montage der Ausgleichswelle 11 erhalten bleibt. Im Übrigen gelten die Ausführungen zu den vorstehenden Figuren. Der Unwuchtgewichtsabschnitt 46 kann zusätzlich zu den am äußeren Ende liegenden Unwuchtgewichtsabschnitten 21, 24 ausgebildet sein oder diese umfassen.

Des Weiteren kann alternativ vorgesehen sein, dass die Lauffläche 18 mit einem randoffenen bzw. nicht voll umfanglich geschlossenen Laufring versehen wird. Diese Ausführungsform ermöglicht, dass ein besonderes Lagermaterial an der Ausgleichswelle 11 einsetzbar ist, um besondere Anforderungen zu erfüllen und gleichzeitig eine Gewichtsreduzierung ermöglicht ist.

Die vorstehend beschriebenen Ausgleichswellen 11 können auch beliebig miteinander in einem Motor kombiniert werden. Dies ist abhängig von der Motorenkonstruktion, so dass die Auslegung der Ausgleichswelle oder der Ausgleichswellen an die auszugleichende statische Unwucht und/oder Momentenunwucht anpassbar ist.

Alle vorbeschriebenen Ausführungsbeispiele haben gemeinsam, dass der Schwerpunkt der Ausgleichswelle 11 spätestens im montieren Zustand einen Schwerpunkt in einer Mitte des Mehrzylindermotors bezogen auf dessen Längsrichtung umfasst.

## Patentansprüche

1. Ausgleichswelle für einen Motor, mit wenigstens einem Unwuchtgewichtsabschnitt (21, 22; 23, 24) und wenigstens einer Lagerstelle (16, 17), wobei der wenigstens eine Unwuchtgewichtsabschnitt (21, 22; 23, 24) der Lagerstelle (16, 17) zugeordnet ist und die Lagerstelle (16, 17) eine radiale Lauffläche (18) aufweist, welche sich nur partiell über einen Umfang der Lagerstelle (16, 17) erstreckt und eine bei Rotation der Ausgleichswelle (11) resultierende Zentrifugalkraft innerhalb einem Bereich der Lagerstelle (16, 17) liegt, der durch die partiell über den Umfang der Lagerstelle (16, 17) sich erstreckende Lauffläche (18) gebildet ist, wobei die Lagerstelle (16, 17) im Querschnitt zur Längsrichtung der Ausgleichswelle (11) gesehen eine Vertiefung (31) aufweist.

2. Ausgleichswelle nach Anspruch 1, **dadurch gekennzeichnet, dass** die Lauffläche (18) ballig ausgebildet ist.

3. Ausgleichswelle nach Anspruch 1, **dadurch gekennzeichnet, dass** die Lagerstelle (16, 17) im Querschnitt zur Längsrichtung der Ausgleichswelle (11) gesehen eine V-förmige, W-förmige, wannenförmige oder topfförmige Vertiefung (31) aufweist.

4. Ausgleichswelle nach Anspruch 1, **dadurch gekennzeichnet, dass** die Vertiefung (31) symmetrisch zur Längsrichtung der Ausgleichswelle (11) ausgebildet ist oder dass die Vertiefung (31) mit der Lauffläche (18) der Lagerstelle (16, 17) einen turbinenradförmigen Querschnitt bildet.

5. Ausgleichswelle nach Anspruch 1, **dadurch gekennzeichnet, dass** die Lauffläche (18) der Lagerstelle (16, 17) und die sich daran anschließende Vertiefung (31) eine Querschnittsfläche bilden, bei der die Rotationsachse (27) innerhalb dieser Querschnittsfläche liegt oder dass die Vertiefung (31) zumindest einen mittleren Wandabschnitt (32) aufweist, der in der Rotationsachse (27) der Ausgleichswelle (11) liegt oder dass die Lauffläche (18) der Lagerstelle (16, 17) und die sich daran anschließende Vertiefung (31) eine Querschnittsfläche bilden, bei der die Rotationsachse (27) außerhalb dieser Querschnittsfläche liegt.

6. Ausgleichswelle nach einem der vorhergehenden Ansprüche, **dadurch gekennzeichnet, dass** die partiell ausgebildete Lauffläche (18) der Lagerstelle (16, 17) sich symmetrisch zur resultierenden Zentrifugalkraft bei der Rotation der Ausgleichswelle (11) erstreckt.

7. Ausgleichswelle nach einem der vorhergehenden Ansprüche, **dadurch gekennzeichnet, dass** ein Umfangswinkel der Lauffläche (18) der ersten Lagerstelle (16; 17) gleich zum Umfangswinkel der Lauffläche (18) von zumindest einer weiteren Lagerstelle (16; 17) ist.

8. Ausgleichswelle nach einem der vorhergehenden Ansprüche, **dadurch gekennzeichnet, dass** die erste und zumindest eine weitere Lauffläche (18) der Lagerstellen (16, 17) in Achslängsrichtung betrachtet bezüglich deren Umfangswinkel gleich ausgerichtet sind.

9. Ausgleichswelle nach einem der Ansprüche 1 bis 7, **dadurch gekennzeichnet, dass** die erste und zumindest eine weitere Lauffläche (18) der Lagerstellen (16, 17) in Achslängsrichtung betrachtet zueinander verdreht angeordnet sind und vorzugsweise die zueinander verdreht angeordneten Laufflächen (18) der ersten und zumindest einer weiteren Lagerstelle (16, 17) in Achslängsrichtung gesehen einen Überschneidungsbereich aufweisen.

10. Ausgleichswelle nach einem der vorhergehenden Ansprüche, **dadurch gekennzeichnet, dass** zumindest eine Lagerstelle (16, 17), deren Lauffläche (18) sowie ein Unwuchtgewichtsabschnitt (21, 22; 23, 24) punktsymmetrisch zur Mittelebene (44) der Ausgleichswelle (11) angeordnet ist.

11. Ausgleichswelle nach einem der vorhergehenden Ansprüche, **dadurch gekennzeichnet, dass** zumindest ein Unwuchtgewichtsabschnitt (46) vorgesehen ist, der zumindest einen Außenumfangsabschnitt mit einem größeren Durchmesser aufweist als derjenige Durchmesser der zumindest einen Lauffläche (18) der Lagerstelle (16, 17) und vorzugsweise an einem äußeren Ende des Grundkörpers (14) vorgesehen ist.

## Claims

1. A balancing shaft for an engine having at least one unbalanced weight portion (21, 22; 23, 24) and at least one bearing (16, 17), the at least one unbalanced weight portion (21, 22; 23, 24) being associated with the bearing (16, 17), and the bearing (16, 17) has a radial running face (18) which extends only partially over a periphery of the bearing (16, 17) and a centrifugal force which results during rotation of the balancing shaft (11) is situated within a region of the bearing (16, 17) that is formed by the running face (18) which extends partially over the periphery of the bearing (16, 17), wherein the bearing (16, 17) has, viewed in cross section to the longitudinal direction of the balancing shaft (11) a depression (31).

2. The balancing shaft as claimed in claim 1, **characterized in that** the running face (18) is spherical in its configuration.

3. The balancing shaft as claimed in one of the preceding claims, **characterized in that** the bearing (16, 17) has, viewed in cross section to the longitudinal direction of the balancing shaft (11), a V-shaped, W-shaped, tub-shaped or cupshaped depression.

4. The balancing shaft as claimed in claim 1, **characterized in that** the depression (31) is configured symmetrically to the longitudinal direction of the balancing shaft (11) or the depression (31) forms with the running face (18) of the bearing (16, 17) a turbine wheel-like cross section.

5. The balancing shaft as claimed in claim 4, characterized that the running face (18) of the bearing (16, 17) and the depression (31) adjoining it form a cross-sectional surface in which the axis of rotation (27) lies within this cross-sectional surface or that the depression (31) has at least one central wall portion (32) which is situated in the axis of rotation (27) of the balancing shaft (11) or that the running face (18) of the bearing (16, 17) and the depression (31) adjoining it form a cross-sectional surface in which the axis of rotation (27) lies outside this cross-sectional surface.

6. The balancing shaft as claimed in one of the preceding claims, **characterized in that** the partially configured running face (18) of the bearing (16, 17) extends symmetrically to the resulting centrifugal force during the rotation of the balancing shaft (11).

7. The balancing shaft as claimed in one of the preceding claims, **characterized in that** a peripheral angle of the running face (18) of the first bearing (16, 17) is equal to the peripheral angle of the running face (18) of at least one further bearing (16, 17).

8. The balancing shaft as claimed in one of the preceding claims, **characterized in that** the first and at least one further running face (18) of the bearings (16, 17) are of the same orientation, viewed in the longitudinal direction of the axis, with respect to the peripheral angle thereof.

9. The balancing shaft as claimed in one of claims 1 to 7, **characterized in that** the first and at least one further running face (18) of the bearings (16, 17) are arranged, viewed in the longitudinal direction of the axis, rotated relative to one another and preferably that the running faces (18), which are arranged rotated relative to one another, of the first and at least one further bearing (16, 17) have, viewed in the longitudinal direction of the axis, an overlap region.

10. The balancing shaft as claimed in one of the preceding claims, **characterized in that** at least one bearing (16, 17), the running face (18) thereof and an unbalanced weight portion (21, 22; 23, 24) are arranged point-symmetrically to the center plane (44) of the balancing shaft (11).

11. The balancing shaft as claimed in one of the preceding claims, **characterized in that** at least one unbalanced weight portion (46) is provided, which has at least one outer peripheral portion having a larger diameter than that diameter of the at least one running face (18) of the bearing (16, 17) and preferably is provided at an outer end of the basic element (14).

## Revendications

1. Arbre d'équilibrage pour un moteur, avec au moins une partie de contrepoids (21, 22; 23, 24) et au moins un point d'appui (16, 17), ladite au moins une partie de contrepoids (21, 22; 23, 24) étant affectée au point d'appui (16, 17) et le point d'appui (16, 17) présentant une surface de roulement radiale (18) qui s'étend seulement de manière partielle sur une circonférence du point d'appui (16, 17) et une force centrifuge résultant de la rotation de l'arbre d'équilibrage (11) étant située à l'intérieur d'une zone du point d'appui (16, 17) laquelle est formée par la surface de roulement (18) s'étendant de manière partielle sur la circonférence du point d'appui (16, 17), la surface d'appui (16, 17) présentant, vue en coupe transversale par rapport au sens longitudinal de l'arbre d'équilibrage (11), un creux (31).

2. Arbre d'équilibrage selon la revendication 1, **caractérisé en ce que** la surface de roulement (18) est de forme bombée.

3. Arbre d'équilibrage selon la revendication 1, **caractérisé en ce que** le point d'appui (16, 17) présente, vu en coupe transversale par rapport au sens longitudinal de l'arbre d'équilibrage (11), un creux (31) en forme de V, en forme de W, en forme de bac ou en forme de pot.

4. Arbre d'équilibrage selon la revendication 1, **caractérisé en ce que** le creux (31) est réalisé de manière symétrique au sens longitudinal de l'arbre d'équilibrage (11) ou que le creux (31) forme, avec la surface de roulement (18) du point d'appui (16, 17), une section en forme de roue de turbine.

5. Arbre d'équilibrage selon la revendication 1, **caractérisé en ce que** la surface de roulement (18) du point d'appui (16, 17) et le creux (31) qui y est contigu forment une surface de section transversale telle que l'axe de rotation (27) est située à l'intérieur de ladite surface de section transversale ou **en ce que** le creux (31) présente au moins une partie de paroi médiane (32) qui est située dans l'axe de rotation (27) de l'arbre d'équilibrage (11) ou **en ce que** la surface de roulement (18) du point d'appui (16, 17) et le creux (31) qui y est contigu forment une surface de section transversale telle que l'axe de rotation (27) est située à l'extérieur de ladite surface de section transversale.

6. Arbre d'équilibrage selon l'une quelconque des revendications précédentes, **caractérisé en ce que** la surface de roulement (18) du point d'appui (16, 17), partiellement formée, s'étend de manière symétrique à la force centrifuge résultant de la rotation de l'arbre d'équilibrage (11).

7. Arbre d'équilibrage selon l'une quelconque des revendications précédentes, **caractérisé en ce qu'**un angle inscrit de la surface de roulement (18) du premier point d'appui (16, 17) est égal à l'angle inscrit de la surface de roulement (18) d'au moins un autre point d'appui (16, 17).

8. Arbre d'équilibrage selon l'une quelconque des revendications précédentes, **caractérisé en ce que**, vues dans le sens longitudinal de l'axe, la première et au moins une autre surface de roulement (18) des points d'appui (16, 17) sont, quant à leur angle inscrit, orientées dans le même sens.

9. Arbre d'équilibrage selon l'une quelconque des revendications 1 à 7, **caractérisé en ce que** la première et au moins une autre surface de roulement (18) des points d'appui (16, 17) sont, vues dans le sens longitudinal de l'axe, déplacées angulairement l'une par rapport à l'autre, et **en ce que** de préférence les surfaces de roulement (18) du premier et d'au moins un autre point d'appui (16, 17) ainsi déplacées angulairement l'une par rapport à l'autre présentent, vues dans le sens longitudinal de l'axe, une zone de superposition.

10. Arbre d'équilibrage selon l'une quelconque des revendications précédentes, **caractérisé en ce qu'**au moins un point d'appui (16, 17), la surface de roulement (18) de celui-ci ainsi qu'une partie de contrepoids (21, 22; 23, 24) sont disposés de manière centro-symétrique au plan central (44) de l'arbre d'équilibrage (11).

11. Arbre d'équilibrage selon l'une quelconque des revendications précédentes, **caractérisé en ce qu'**il est prévu au moins une partie de contrepoids (46) qui présente au moins une partie de circonférence extérieure avec un diamètre supérieur au diamètre de ladite au moins une surface de roulement (18) du point d'appui (16, 17) et que celle-ci est de préférence prévue à une extrémité extérieure du corps de base (14).
